# EUROPEAN PATENT APPLICATION

(11) **EP 4 471 749 A1**
(43) Date of publication of application: **04.12.2024**
(21) Application number: 22935710.8
(22) Date of filing: 14.12.2022
(51) Int. Cl.: G09F 3/04, B32B 7/028, B32B 27/26, B32B 27/30

(54) **SHRINK LABEL**

(30) Priority: 30.03.2022 JP 2022055375
(71) Applicant: Fuji Seal International, Inc., Osaka-shi, Osaka 532-0003 (JP)
(72) Inventor: TSUBOUCHI Shota, Osaka-shi, Osaka 532-0003 (JP); HARADA Masafumi, Osaka-shi, Osaka 532-0003 (JP)
(74) Representative: Prüfer & Partner mbB Patentanwälte · Rechtsanwälte
(86) International application number: PCT/JP2022/045975
(87) International publication number: WO 2023/188581

(57) **Abstract**

Provided is a shrink label capable of suppressing the occurrence of defective attachment onto a container while suppressing the occurrence of ink cracking. A shrink label 10 includes an outer layer 3b, which is a water-based acrylic ink layer including an acrylic resin and a curing agent on a heat-shrinkable base material 1, where the coefficient of dynamic friction of the outer layer 3b against a polyester surface having a water droplet of 0.1 mL is 1.0 or less, and the coefficient of dynamic friction of the outer layer 3b against a polyester surface having a water droplet of 0.01 mL is 2.5 or less.

## Description

### Technical Field

The present disclosure relates to a shrink label.

### Background Art

In recent years, plastic containers such as polyethylene terephthalate bottles (e.g., PET bottles) have been used for various products. It is also common that a shrink label including a printing layer for displaying product information or the like is attached onto the body of a plastic container.

For example, Patent Document 1 describes a heat-shrinkable cylindrical film that is attached to the outer circumference of the body of a container, in which the film is improved such that a dynamic friction coefficient adjusting film for adjusting a coefficient of dynamic friction is provided on the inner surface of the film facing the outer circumference of the body of the container to prevent abnormal attachment.

Traditionally, an oil-based ink is applied onto the surface of a plastic film to form an ink layer for a plastic label. However, from an increased environmental awareness in recent years and from a point of view of suppressing generation of VOC (volatile organic compound), there is a demand for the use of water-based inks using aqueous solvents, instead of the use of oil-based inks using organic solvents.

### Citation List

### Patent Literature

Patent Document 1: JP 2019-014157 A

### Summary of Invention

### Technical Problem

However, when a water-based ink is used to form a water-based ink layer on the innermost surface of a shrink label made up of a heat-shrinkable cylindrical film as described in Patent Document 1, there have been an occurrence of ink cracking in the water-based ink layer and an occurrence of defective attachment onto a container in some cases, and hence its improvement has been required.

### Solution to Problem

According to embodiments disclosed herein, there can be provided a shrink label including: a heat-shrinkable base material; and an outer layer that is a water-based acrylic ink layer on the base material, the outer layer including an acrylic resin and a curing agent, wherein a coefficient of dynamic friction of the outer layer against a polyester surface having a water droplet of 0.1 mL (milliliter) is 1.0 or less, and a coefficient of dynamic friction of the outer layer against a polyester surface having a water droplet of 0.01 mL is 2.5 or less.

### Advantageous Effects of Invention

According to the embodiments disclosed herein, there can be provided a shrink label capable of suppressing an occurrence of defective attachment onto a container while suppressing an occurrence of ink cracking.

### Brief Description of Drawings

FIG. 1 is a schematic cross-sectional view of an example of a shrink label according to an embodiment.
FIG. 2 is a schematic plan view of a test piece used for the measurement of the coefficient of static friction and the coefficient of dynamic friction of the shrink label of the embodiment.
FIG. 3 is a schematic plan view of a counterpart member used for the measurement of the coefficient of static friction and the coefficient of dynamic friction of the shrink label of the embodiment.
FIG. 4 is a schematic side view of a tension testing machine used for the measurement of the coefficient of static friction and the coefficient of dynamic friction of the shrink label of the embodiment.
FIG. 5 is a schematic plan view illustrating a method for measuring the coefficient of static friction and the coefficient of dynamic friction of the shrink label of the embodiment.
FIG. 6 is a schematic cross-sectional view of the shrink label of Experimental Example 7.
FIG. 7 is a schematic side view of the cylindrical shrink labels of Experimental Examples 1 to 7.
FIG. 8 is a schematic perspective view illustrating an evaluation method of the ink cracking of the shrink labels of Experimental Examples 1 to 7.
FIG. 9 is a photograph illustrating an example in which it was evaluated that ink peeling occurred in the ink cracking evaluation of the shrink labels of Experimental Examples 1 to 7.
FIG. 10 is a schematic plan view of an example of a test piece having each of four sides fixed with a tape and used for evaluation of anti-blocking properties of the shrink labels of Experimental Examples 1 to 7.
FIG. 11 is a schematic perspective view of an example of a state in which a test piece is placed on a pedestal used for evaluation of anti-blocking properties of the shrink labels of Experimental Examples 1 to 7.

### Description of Embodiments

Hereinafter, embodiments of the present disclosure will be described with reference to the drawings. It should be noted that the same reference numerals denote the same parts or equivalent parts in the drawings used to describe the embodiments.

### <Shrink label>

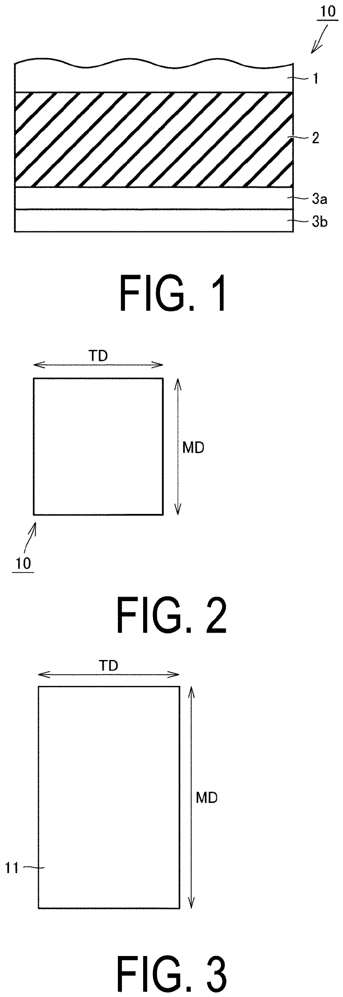

FIG. 1 illustrates a schematic cross-sectional view of an example of the shrink label of the embodiment. The shrink label 10 illustrated in FIG. 1 includes a base material 1 and an outer layer 3b that is a water-based acrylic ink layer on the base material 1. Between the base material 1 and the outer layer 3b, there are located: a color ink layer 2 on the base material 1; and an inner layer 3a on the color ink layer 2.

### <Heat-shrinkable base material>

The heat-shrinkable base material 1 (hereinafter referred to as "base material 1") is capable of supporting at least the outer layer 3b, and contains a resin that can be shrunk by heating. The thermal shrinkage rate of the base material 1 in the main shrinkage direction when the base material 1 is immersed in hot water at 90°C for 10 seconds is, for example, 30% or more, and preferably 50% or more.

As the resin contained in the base material 1, a thermoplastic resin can be used, for example. As the resin contained in the base material 1, examples that can be used include a polyester (PET) resin, a polypropylene resin, a polystyrene (PS) resin, and a polyethylene resin. The base material 1 may be composed of, for example, a single layer containing one or more types of the resins described above, or may be composed of a plurality of layers having more than one of the single layers stacked.

### <Color ink layer>

The color ink layer 2 is a layer formed through drying of a color ink printed on the base material 1. The color ink layers 2 may contain, for example, different color pigments. By containing different color pigments, a plurality of color ink layers 2 having different colors can be provided in a predetermined region of the base material 1. This allows to provide a region of a single layer of the color ink layer 2 or a region of a plurality of layers of the color ink layer 2 in which the color ink layers 2 are laid on top of another, enabling to form a predetermined design or character. As one color ink or a plurality of color inks printed on the base material 1 and used for the formation of the color ink layer 2, examples that can be used include: an aqueous solvent such as water or a solution of alcohol in water (or may be an aqueous dispersion medium in the case of an emulsion, the same applies hereinafter); and a water-based color ink containing a resin such as a urethane resin, an additive, a color pigment, and the like. One color ink or a plurality of color inks used for the formation of the color ink layer 2 preferably contain a thermoplastic resin as a resin component, and more preferably contain a urethane-based thermoplastic resin, from a point of view of conformability to thermal shrinkage and an ink cracking preventive effect. As the urethane resins contained in one color ink or in a plurality of color inks used for the formation of the color ink layer 2, there can be used, for example, urethane-based resins similar to the below-described urethane resins used for the formation of the below-described inner layer 3a.

### <Inner layer>

The inner layer 3a is a layer formed through drying of an ink on the color ink layer 2. As the ink used for the formation of the inner layer 3a, there can be used, for example, a water-based ink that contains an aqueous solvent such as water or a solution of alcohol in water, a resin, and a curing agent.

As the resins contained in the ink used for the formation of the inner layer 3a, examples that can be used as the resin include acrylic resins, urethane resins, polyester resins, polyamide resins, cellulose resins, vinyl chloride resins, vinyl acetate resins, polyolefin resins (e.g., polyethylene resins or polybutadiene resins, for example), isocyanate resins, rosin resins, polyvinyl alcohol resins (PVA resins), and imine resins, and among them, an acrylic resin or a urethane resin is preferably used. As the resin contained in the ink used for the formation of the inner layer 3a, there can be used, for example, a thermoplastic resin. As the acrylic resin contained in the ink used for the formation of the inner layer 3a, there can be used, for example, an acrylic resin similar to the below-described acrylic resin used for the formation of the below-described outer layer 3b.

As the urethane resins contained in the ink used for the formation of the inner layer 3a, there can be used, for example, a resin obtained by reacting a polyisocyanate compound with a polyol compound (i.e., a copolymer of a polyisocyanate compound and a polyol).

As the polyisocyanate compound, examples that can be used include one type or a mixture of two or more types of known aromatic, aliphatic and alicyclic diisocyanates. As the diisocyanates, examples that can be used include tolylene diisocyanate, 4,4-diphenylmethane diisocyanate, 1,3-phenylene diisocyanate, hexamethylene diisocyanate, xylylene diisocyanate, 1,5-naphthalene diisocyanate, and isophorone diisocyanate.

As the polyol compound, examples that can be used include: low-molecular-weight glycols such as ethylene glycol, diethylene glycol, 1,3-propanediol, propylene glycol (1,2-propanediol), butanediol (1,3-butanediol, 1,4-butanediol, etc.), 1,6-hexanediol and cyclohexanedimethanol; polyether diols such as polyethylene glycol, polypropylene glycol, polytetramethylene glycol, and polytetramethylene glycol-polycaprolactone copolymer; polyester diols obtained from diols such as propylene glycol, butanediol, and hexanediol and diprotic acids such as adipic acid, sebacic acid, azelaic acid, isophthalic acid, terephthalic acid, and fumaric acid; and diols such as polycaprolactone diol, polyvalerolactone diol, and lactone block copolymer diol.

As the curing agent contained in the ink used for the formation of the inner layer 3a, examples that can be used include curing agents corresponding to the resins contained in the inner layer 3a. For example, when a hydroxyl group or an amino group is included in the resin contained in the inner layer 3a, an isocyanate-based curing agent can be used as the curing agent. For example, when an amino group or a carbonyl group is included in the resins contained in the inner layer 3a, an epoxy-based curing agent can be used as the curing agent. For example, when a carbonyl group is included in the resin contained in the inner layer 3a, a carbodiimide-based curing agent, an aziridine-based curing agent, or a hydrazide-based curing agent can be used as the curing agent. The content percentage of the curing agent can be, for example, 1.5 wt.% or more and 15 wt.% or less of the total weight of the inner layer 3a.

For example, the inner layer 3a may be formed as a white ink layer by including a white pigment in the ink used for the formation of the inner layer 3a, or may be formed as a transparent ink layer (medium) by not including a color pigment in the ink used for the formation of the inner layer 3a.

### <Outer layer>

The outer layer 3b is a layer formed through drying of the water-based acrylic ink on the inner layer 3a. As the water-based acrylic ink used for the formation of the outer layer 3b, examples that can be used include a water-based acrylic ink that contains an aqueous solvent, an acrylic resin, and a curing agent, and a water-based acrylic emulsion ink in which an acrylic resin is dispersed in an aqueous solvent is preferably used.

As the acrylic resin contained in the water-based acrylic ink used for the formation of the outer layer 3b, for example, a polymer composed of at least an acrylic monomer as a monomer component can be used, and an acrylic thermoplastic resin is preferably used. As the monomer component composing the acrylic resin set forth above, a monomer component other than the acrylic monomer may be contained.

Examples of the acrylic monomer include (meth)acrylic acid alkyl esters having a linear or branched alkyl group, such as methyl (meth)acrylate, ethyl (meth)acrylate, propyl (meth)acrylate, isopropyl (meth)acrylate, butyl (meth)acrylate, isobutyl (meth)acrylate, s-butyl (meth)acrylate, t-butyl (meth)acrylate, hexyl (meth)acrylate, octyl (meth)acrylate, 2-ethylhexyl (meth)acrylate, isononyl (meth)acrylate, decyl (meth)acrylate, and dodecyl (meth)acrylate [preferably (meth)acrylic acid C₁₋₁₂ alkyl esters etc.]; (meth)acrylic acid; carboxy group-containing (meth)acrylic acid esters, such as carboxyethyl acrylate; hydroxy group-containing (meth)acrylic acid esters, such as hydroxymethyl (meth)acrylate, 2-hydroxyethyl (meth)acrylate, 2-hydroxypropyl (meth)acrylate, 3-hydroxypropyl (meth)acrylate, 6-hydroxyhexyl (meth)acrylate, diethylene glycol mono (meth)acrylate and dipropylene glycol mono (meth)acrylate [preferably hydroxy (meth)acrylate C₁₋₈ alkyl ester etc.]; (meth)acrylic acid cycloalkyl esters, such as cyclohexyl (meth)acrylate and isobornyl (meth)acrylate; (meth)acrylic acid amide derivatives, such as N-methylol (meth) acrylamide, N-butoxymethyl (meth)acrylamide, N,N-dimethyl (meth)acrylamide, and N,N-diethyl (meth)acrylamide; and monomers including a (meth)acryloyl group (monomers including at least an acryloyl group or a methacryloyl group), such as (meth)acrylic acid dialkylaminoalkyl esters, such as dimethylaminoethyl (meth)acrylate, diethylaminoethyl (meth)acrylate, dipropylaminoethyl (meth)acrylate, dimethylaminopropyl (meth)acrylate, and dipropylaminopropyl (meth)acrylate. The acrylic monomer may be used singly or in combination of two or more kinds thereof.

Examples of monomer components other than the acrylic monomer, which compose the acrylic resin, include carboxyl group-containing polymerizable unsaturated compounds such as crotonic acid, itaconic acid, fumaric acid and maleic acid, and anhydrides thereof; styrene compounds such as styrene, vinyltoluene and α-methylstyrene; vinyl esters such as vinyl acetate and vinyl propionate; vinyl halides such as vinyl chloride; vinyl ethers such as methyl vinyl ether; cyano group-containing vinyl compounds such as (meth) acrylonitrile; and ethylene and propylene.

As the curing agent contained in the water-based acrylic ink used for the formation of the outer layer 3b, there can be used the above-described curing agent contained in the ink used for the formation of the inner layer 3a, and for example, an epoxy-based curing agent can be used. When a curing agent is contained in the water-based acrylic ink used for the formation of the outer layer 3b, there is a tendency that the occurrence of ink cracking in the outer layer 3b can be suppressed. The content percentage of the curing agent contained in the water-based acrylic ink used for the formation of the outer layer 3b can be, for example, 1 wt.% or more and 10 wt.% or less of the total weight of the outer layer 3b from a point of view of suppressing the occurrence of defective attachment onto a container while suppressing the occurrence of ink cracking.

For example, the outer layer 3b may be formed as a white ink layer by including a white pigment in the water-based acrylic ink used for the formation of the outer layer 3b, or may be formed to be a transparent ink layer (medium) by not including a color pigment in the water-based acrylic ink used for the formation of the outer layer 3b.

### <Content percentage of curing agent>

The content percentage of the curing agent in the outer layer 3b is preferably smaller than the content percentage of the curing agent in the inner layer 3a. This is based on the finding, as a result of intensive studies by the present inventor, that the content percentage of the curing agent in the outer layer 3b is made smaller than the content percentage of the curing agent in the inner layer 3a, whereby a shrink label 10 capable of ensuring an appropriate water resistance can be provided even when a water-based acrylic ink is used in the outer layer 3b and suppressing the occurrence of blocking. Note that, the term "blocking" refers to a phenomenon that makes it difficult to unroll the shrink label 10 from an original label roll as a result of sticking between shrink labels 10 located above and below in the original label roll, around which the shrink labels 10 are wound, due to causes such as the transfer of the water-based acrylic ink constituting the outer layer 3b of the shrink label 10 to the base material 1 of another shrink label 10 located immediately above or below of the first shrink label 10.

As a result of intensive studies by the present inventor from a point of view of suppressing the occurrence of this blocking (anti-blocking property), the content percentage of the curing agent in the outer layer 3b is made smaller than the content percentage of the curing agent in the inner layer 3a, whereby the anti-blocking property can be improved and the shrink label 10 having excellent water resistance has been successfully developed. The reason for this is not clear, but at least the following 1) and 2) are supposedly involved.
1) The curing agent in the inner layer 3a improves the water resistance of the outer layer 3b itself and also penetrates into the color ink layer 2 thereby improving the water resistance of the color ink layer 2, and as a result, the water resistance of the entire printed layer including the color ink layer 2, the inner layer 3a and the outer layer 3b can be improved.
2) Since the amount of the curing agent in the outer layer 3b is not too large, the anti-blocking property can be improved.

The shrink label 10 may have a cylindrical shape. When the shrink label 10 has a cylindrical shape, it can be formed into a cylindrical shape such that the outer layer 3b becomes the inside of the cylindrical shape, for example.

### <Production method for label>

The shrink label 10 can be produced, for example, as follows. First, a step of forming the color ink layer 2 on the base material 1 is performed. This step can be performed through, for example, an act in which a color ink used for the formation of the color ink layer 2 is printed on the surface of the base material 1 by flexographic printing, gravure printing, or the like, followed by an act of drying the color ink, and the like.

Next, a step in which the inner layer 3a is formed on the color ink layer 2 is performed. This step can be performed through, for example, an act in which an ink used for the formation of the inner layer 3a is printed on the surface of the color ink layer 2 by flexographic printing, gravure printing, or the like, followed by an act of drying this ink, and the like.

Next, a step in which the outer layer 3b is formed on the inner layer 3a is performed. This step can be performed through, for example, an act in which a water-based acrylic ink used for the formation of the outer layer 3b is printed on the surface of the inner layer 3a by flexographic printing, gravure printing, or the like, followed by an act of drying this water-based acrylic ink, and the like. The shrink label 10 can be produced through the above-described steps.

### <Coefficient of dynamic friction of outer layer against polyester surface having water droplet of 0.1 mL or 0.01 mL>

The coefficient of dynamic friction of the outer layer 3b of the shrink label 10 against a polyester surface having a water droplet of 0.1 mL is 1.0 or less, and the coefficient of dynamic friction of the outer layer 3b against a polyester surface having a water droplet of 0.01 mL is 2.5 or less. In general, the innermost surface of a shrink label to be attached onto a container on the side attached onto the container is often provided with a water-based urethane ink layer obtained by printing and drying a water-based urethane ink containing a urethane resin and a curing agent in an aqueous solvent. However, when using such a shrink label having a water-based urethane ink layer on the innermost surface, defective attachment of the shrink label onto a container has occurred in some cases.

As a result of intensive studies on this, the present inventor has found that the occurrence of defective attachment onto a container can be suppressed while suppressing the occurrence of ink cracking in the shrink label 10 when the outer layer 3b composing the innermost surface of the shrink label 10 on the side attached onto a container is configured of a water-based acrylic ink layer formed by using a water-based acrylic ink containing an acrylic resin and a curing agent, and the values of the coefficient of dynamic friction, which are measured by a special measurement method for the coefficient of dynamic friction of the outer layer 3b of the shrink label 10 against a polyester surface having a water droplet of 0.1 mL and the coefficient of dynamic friction of the outer layer 3b of the shrink label 10 against a polyester surface having a water droplet of 0.01 mL, are tailored to 1.0 or less and 2.5 or less, respectively, and has completed the present invention.

From a point of view of suppressing the occurrence of defective attachment onto a container while suppressing the occurrence of ink cracking in the shrink label 10, the coefficient of dynamic friction of the outer layer 3b of the shrink label 10 against a polyester surface having a water droplet of 0.1 mL is preferably 0.6 or less, and more preferably 0.1 or more and 0.5 or less.

From a point of view of suppressing the occurrence of defective attachment onto a container while suppressing the occurrence of ink cracking in the shrink label 10, the coefficient of dynamic friction of the outer layer 3b of the shrink label 10 against a polyester surface having a water droplet of 0.01 mL is preferably 2.5 or less, more preferably 2.0 or less, and still more preferably 0.1 or more and 1.5 or less.

### <Coefficient of static friction of outer layer against polyester surface having a water droplet of 0.1 mL or 0.01 mL>

From a point of view of suppressing the occurrence of defective attachment onto a container while suppressing the occurrence of ink cracking in the shrink label 10, the coefficient of static friction of the shrink label 10 of the outer layer 3b against a polyester surface having a water droplet of 0.1 mL is preferably 0.6 or less, and more preferably 0.1 or more and 0.5 or less. From a point of view of suppressing the occurrence of defective attachment onto a container while suppressing the occurrence of ink cracking in the shrink label 10, the coefficient of static friction of the shrink label 10 of the outer layer 3b against a polyester surface having a water droplet of 0.01 mL is preferably 0.6 or less, and more preferably 0.1 or more and 0.5 or less.

### <Coefficient of dynamic friction of outer layer against polyester surface in dry state with no water droplet (hereinafter, referred to as "at the time of DRY")>

From a point of view of suppressing the occurrence of defective attachment onto a container while suppressing occurrence of ink cracking in the shrink label 10, the coefficient of dynamic friction of the shrink label 10 of the outer layer 3b against the polyester surface at the time of DRY is preferably 0.6 or less, and more preferably 0.1 or more and 0.5 or less.

### <Coefficient of static friction of outer layer against polyester surface at the time of DRY>

From a point of view of suppressing the occurrence of defective attachment onto a container while suppressing the occurrence of ink cracking in the shrink label 10, the coefficient of static friction of the shrink label 10 of the outer layer 3b against the polyester surface at the time of DRY is preferably 0.6 or less, and more preferably 0.1 or more and 0.5 or less.

### <Measurement of coefficient of static friction and coefficient of dynamic friction>

The method for measuring the coefficient of static friction and the coefficient of dynamic friction of the outer layer against a polyester surface having a water droplet of 0.1 mL and the method for measuring the coefficient of static friction and the coefficient of dynamic friction of the outer layer against a polyester surface having a water droplet of 0.01 mL are as follows.

First, a shrink label 10 having a rectangular shape illustrated in the schematic plan view of FIG. 2 is prepared. The rectangular shrink label 10 illustrated in FIG. 2 has a width of 100 mm in the machine direction (MD) and a width of 80 mm in the transverse direction (TD).

In addition, a polyester film ("E5100" manufactured by Toyobo Co., Ltd., 100 µm in thickness) having a polyester surface 11 which is a rectangular untreated surface illustrated in the schematic plan view of FIG. 3 is prepared. The rectangular polyester film illustrated in FIG. 3 has a width of 300 mm in the MD direction and a width of 100 mm in the TD direction.

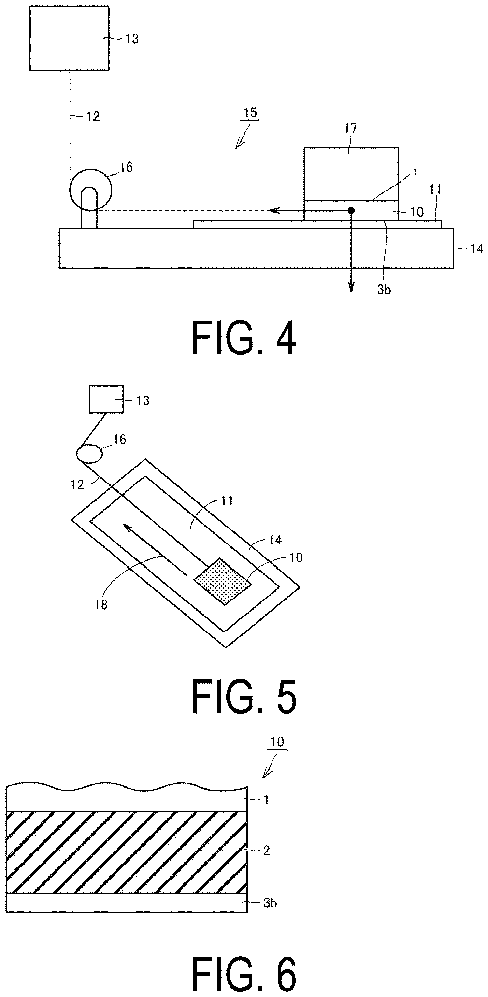

Next, a tension testing machine 15 as illustrated in the schematic side view of FIG. 4 is prepared. As the tension testing machine 15, Tensile Tester (AGS-50G) manufactured by Shimadzu Corporation or a tension testing machine capable of similar measurement is used. The tension testing machine 15 includes a wire 12, a load cell 13, a test stand 14 installed horizontally, and a pulley 16 located above the test stand 14. The test stand 14 is made up of a nonmagnetic metal body in order to prevent the influence of static electricity. The pulley 16 can rotate smoothly, and is installed at a height and a position so the wire 12 and the surface of the test stand 14 as to be parallel to each other.

Next, as illustrated in FIG. 4, a polyester film is placed on the test stand 14 with the polyester surface 11 facing upward without wrinkles. Subsequently, a water droplet of 0.1 mL or 0.01 mL tap water is dropped onto the polyester surface 11. Here, the water droplet is dropped at one position on the polyester surface 11 corresponding to the center of a shrink label 10 to be installed on the polyester surface 11.

Next, a weight 17 having a mass of 200 g ± 2 g (1.96 N ± 0.02 N) and a square bottom surface of 63 mm × 63 mm is prepared. Then, the top surface of the base material 1 of the shrink label 10 is attached onto the bottom surface of the weight 17 in such a way that the shrink label 10 is not wrinkled. Here, the shrink label 10 is attached in such a way that the center of the bottom surface of the weight 17 is located at the center of the top surface of the base material 1 of the shrink label 10.

Next, the shrink label 10 is attached to one end of the wire 12 connected to the load cell 13. The wire 12 is put into a condition of slightly slack without tension.

Next, the shrink label 10 attached onto the bottom surface of the weight 17 is gently placed so the water droplet on the polyester surface 11 as to be in contact with the center of the surface of the outer layer 3b of the shrink label 10 and the surface of the outer layer 3b as to be parallel to the surface of the test stand 14.

Next, as illustrated in FIG. 5, the load cell 13 pulls the wire 12 through the pulley 16 in the direction of the arrow 18 by a distance of 85 mm at a speed of 100 mm/min in the direction parallel to the surface of the test stand 14 thereby measuring the static frictional force and the dynamic frictional force of the outer layer against the polyester surface having the water droplet of 0.1 mL or 0.01 mL. Here, the dynamic friction force of the outer layer against the polyester surface having the water droplet of 0.1 mL or 0.01 mL is the mean value measured at a distance from 10 mm to 85 mm. Then, the coefficient of static friction and the coefficient of dynamic friction of the outer layer against the polyester surface having the water droplet of 0.1 mL or 0.01 mL are calculated from the measured static frictional force and dynamic frictional force, respectively. Note that, the measurement conditions of the static frictional force and the dynamic frictional force are based on JIS K 7125:1999. The measurement temperature and humidity of the static frictional force and the dynamic frictional force are based on JIS K 7100 standard temperature condition grade 2 (temperature: 23±2°C, relative humidity: 50±10%).

Note that, the coefficient of static friction and the coefficient of dynamic friction of the shrink label 10 of the outer layer 3b against the polyester surface at the time of DRY were performed in the same manner as described above except that no water droplet was dropped on the polyester surface 11.

### Examples

### <Preparation of shrink label of Experimental Example 1>

As a shrink label of Experimental Example 1, a shrink label 10 having the cross-sectional configuration illustrated in FIG. 1 was prepared. First, a water-based flexographic ink (Hydric FCF series) containing a urethane-based thermoplastic resin (manufactured by Dainichiseika Color & Chemicals Mfg. Co., Ltd.) containing a nonwhite color pigment was printed upon one surface of a base material 1 made up of a multilayer shrink film (front layer: PET resin/central layer: PS resin/back layer: PET resin, manufactured by GUNZE LIMITED) having a thickness of 40 µm, and then dried, and this process of printing and drying was repeated twice to form a color ink layer 2 (0.6 µm in thickness).

Next, a water-based urethane ink for the formation of an inner layer 3a, in which an aqueous solvent, a urethane resin, an isocyanate-based curing agent, and a white color pigment were contained, was printed on the color ink layer 2, and then dried to form an inner layer 3a made up of a white water-based urethane ink layer. In Experimental Example 1, the content percentage of the isocyanate-based curing agent used for the formation of the inner layer 3a was 5 wt.% of the total weight of the inner layer 3a after drying of the water-based urethane ink for the formation of the inner layer 3a.

Next, a water-based urethane ink for the formation of an outer layer 3b, in which an aqueous solvent, a urethane resin, an isocyanate-based curing agent, and a white color pigment were included, was printed on the inner layer 3a, and then dried to form an outer layer 3b made up of a white water-based urethane ink layer. In Experimental Example 1, the content percentage of the isocyanate-based curing agent used for the formation of the outer layer 3b was 2 wt.% of the total weight of the outer layer 3b after drying of the water-based urethane ink for the formation of the outer layer 3b. The shrink label 10 of Experimental Example 1 was prepared by the above steps.

### <Preparation of shrink label of Experimental Example 2>

A shrink label 10 of Experimental Example 2 was prepared in the same way and under the same conditions as in Experimental Example 1 except that a water-based acrylic ink in which an aqueous solvent, an acrylic resin, an epoxy-based curing agent, and a white color pigment were contained was printed and then dried to form an outer layer 3b made up of a white water-based acrylic ink layer. In Experimental Example 2, the content percentage of the epoxy-based curing agent used for the formation of the outer layer 3b was 2 wt.% of the total weight of the outer layer 3b after drying of the water-based acrylic ink for the formation of the outer layer 3b.

### <Preparation of shrink label of Experimental Example 3>

A shrink label 10 of Experimental Example 3 was prepared in the same way and under the same conditions as in Experimental Example 2 except that a water-based acrylic ink in which an aqueous solvent, an acrylic resin, an epoxy-based curing agent, and a white color pigment were contained was printed and then dried to form an inner layer 3a made up of a white water-based acrylic ink layer. In Experimental Example 3, the content percentage of the epoxy-based curing agent used for the formation of the inner layer 3a was 3 wt.% of the total weight of the inner layer 3a after drying of the water-based acrylic ink for the formation of the inner layer 3a.

### <Preparation of shrink label of Experimental Example 4>

A shrink label 10 of Experimental Example 4 was prepared in the same way and under the same conditions as in Experimental Example 3 except that the content percentage of the epoxy-based curing agent used for the formation of the inner layer 3a was 2 wt.% of the total weight of the inner layer 3a after drying of the water-based acrylic ink for formation of the inner layer 3a, and the content percentage of the epoxy-based curing agent used for formation of the outer layer 3b was 3 wt.% of the total weight of the outer layer 3b after drying of the water-based acrylic ink for the formation of the outer layer 3b.

### <Preparation of shrink label of Experimental Example 5>

A shrink label 10 of Experimental Example 5 was prepared in the same way and under the same conditions as in Experimental Example 4 except that no curing agent was contained in any of the water-based acrylic ink for the formation of the inner layer 3a and the water-based acrylic ink for the formation of the outer layer 3b.

### <Preparation of shrink label of Experimental Example 6>

The shrink label 10 of Experimental Example 6 was prepared in the same way and under the same conditions as in Experimental Example 1 except that no curing agent and no white color pigment were contained in the water-based urethane ink for the formation of the inner layer 3a, a water-based acrylic ink in which an aqueous solvent, an acrylic resin, and an epoxy-based curing agent were contained was printed and then dried to form an outer layer 3b made up of a transparent water-based acrylic ink layer, and the content percentage of the epoxy-based curing agent used for the formation of the outer layer 3b was 6 wt.% of the total weight of the outer layer 3b after drying of the water-based acrylic ink for the formation of the outer layer 3b.

### <Preparation of shrink label of Experimental Example 7>

A shrink label 10 for Experimental Example 7 having the cross-sectional configuration illustrated in FIG. 6 was prepared in the same way and under the same conditions as in Experimental Example 6 except that no inner layer 3a was formed. Note that the shrink labels 10 for Experimental Examples 2 to 4 and Experimental Examples 6 to 7 are Examples, and the shrink labels 10 for Experimental Examples 1 and 5 are Comparative Examples.

### <Measurement of coefficient of static friction and coefficient of dynamic friction of shrink labels of Experimental Examples 1 to 7>

According to the method described in the section "<Measurement of coefficient of static friction and coefficient of dynamic friction>" described above, the coefficient of static friction and the coefficient of dynamic friction of the outer layer against a polyester surface having a water droplet of 0.1 mL and the coefficient of static friction and the coefficient of dynamic friction of the outer layer against a polyester surface having a water droplet of 0.01 mL for shrink labels of Experimental Example 1 to 7 were measured. The results are presented in Table 1. In addition, the coefficient of static friction and the coefficient of dynamic friction of the shrink labels of Experimental Examples 1 to 7 at the time of DRY were measured by the same method and under the same conditions as the method described in the section "<Measurement of coefficient of static friction and coefficient of dynamic friction>" except that no water droplet was dropped. The results are presented in Table 1.

### <Evaluation method for ink cracking in shrink labels of Experimental Examples 1 to 7>

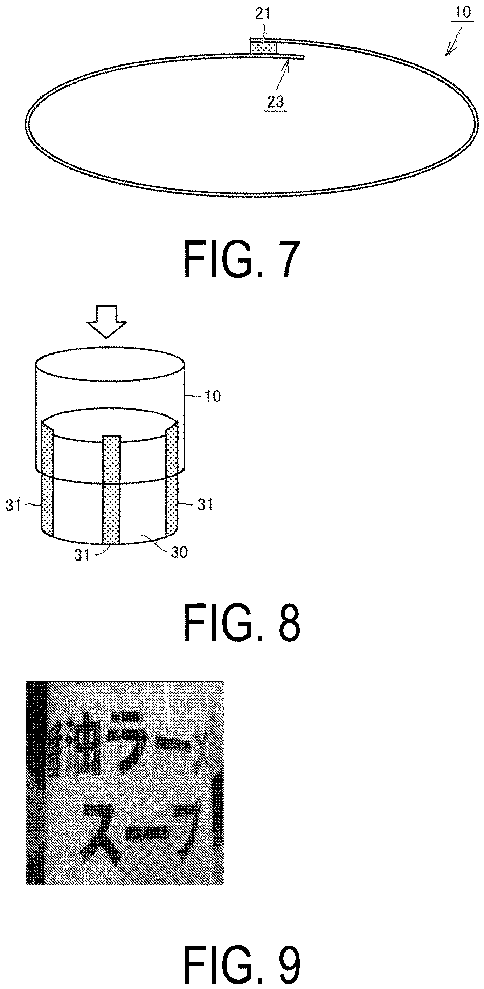

First, each of shrink labels 10 of Experimental Examples 1 to 7 is cut into a size of 90 mm or more, and is wound so that the outer layer 3b of the shrink label 10 is on the inside of the cylinder as illustrated in the schematic side view of FIG. 7. Next, one end of the shrink label 10 of the cut-out shrink label 10 of each of Experimental Examples 1 to 7 was pasted at a pasting portion 21 with an inner residue 23 of a predetermined length running off the edge, by using a pasting mount, so that each of the shrink labels 10 of Experimental Examples 1 to 7 was made into a cylindrical shape having a fold diameter of 100 mm.

Next, there were prepared: a bottle container 30 having a volume of 225 mL with no scratch on its surface; and a strip-shaped spacer 31 as illustrated in the schematic perspective view of FIG. 8. The strip-shaped spacer 31 is a film having the same configuration as each of the shrink labels 10 of Experimental Examples 1 to 7 except that no color pigment was used to make the film transparent, and three sheets of this film having a width of 8 mm in the TD direction and a width of 90 mm or more in the MD direction and having no burr on the cut end face were prepared for each of Experimental Examples 1 to 7.

Next, as illustrated in FIG. 8, for each test of the shrink label 10 of Experimental Examples 1 to 7, three spacers 31 corresponding to each test were pasted onto the outer surface of a bottle container 30 at a predetermined distance from each other. Subsequently, as illustrated in FIG. 8, each of the shrink labels 10 of Experimental Examples 1 to 7 having a cylindrical shape prepared as described above was immersed into hot water at 90°C with each of the shrink label encasing the outer surface of the bottle container 30 so as to encompass the three spacers 31. Note that the spacers 31 were attached at positions so as to be equally spaced from each other to avoid each of the pasting portions 21 of the cylindrical shrink labels 10 of Experimental Examples 1 to 7.

Next, hot water was poured into the bottle container 30 at once, thereafter the bottle container was further immersed in hot water for 20 seconds and then immersed in water for 5 seconds, afterwards the bottle container 30 was taken outside. Then, the bottle container 30 was left until its temperature became room temperature, and after the bottle container 30 was dried, the evaluation for ink crack was carried out according to the following criteria. The results are presented in Table 1.

### <Evaluation criteria for ink crack>

A... Ink peeling as illustrated in FIG. 9 did not occur.
B... Ink peeling as illustrated in FIG. 9 occurred.

If the evaluation criteria for ink cracking was criteria A or higher, it was evaluated that the occurrence of ink cracking in the outer layer 2b of the shrink label was able to be suppressed.

### <Evaluation method for anti-blocking property of shrink labels of Experimental Examples 1 to 7>

First, each of the shrink labels of Experimental Example 1 to 7 was cut into a square shape of 50 mm in length × 50 mm in width to prepare a test piece of each of the shrink labels of Experimental Examples 1 to 7 (hereinafter, the test piece is referred to as a "test pieces of Experimental Examples 1 to 7"). Next, each of the test pieces of Experimental Examples 1 to 7 was laid on top of another in the order of paper, (test piece, test piece), paper, (test piece, test piece), paper, (test piece, test piece), paper... Here, the multilayer of (test piece/test piece) was stacked in the order of (front surface/back surface (front surface of outer layer 3b)) and (back surface/back surface) so these surfaces as to be in contact with each other, and this stacking was repeated three times.

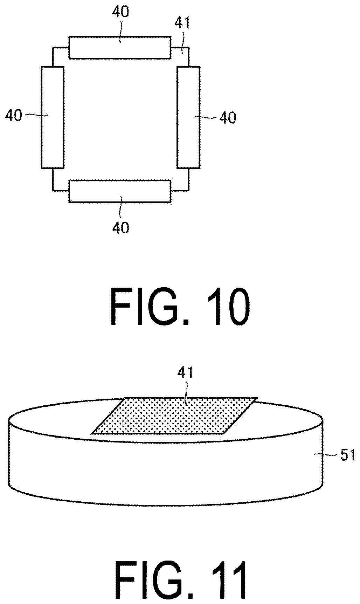

Next, as illustrated in the schematic plan view of FIG. 10, each of four sides of the test piece was fixed with a tape 40 to prevent misalignment in the stacking state of the test pieces 41 laid on top of another as described above. Here, the tapes 40 were placed at a position where an after-mentioned weight to be placed on the test piece 41 would not be placed. Next, as illustrated in the schematic perspective view of FIG. 11, a pedestal 51 having a protrusion (in cylindrical shape with a diameter of 35 mm) was prepared, and the test piece 41 was placed on the protrusion of the pedestal 51. Next, with a 20 kg weight pressure being applied to the test piece 41, the test piece was left for 24 hours in an environment of a temperature of 25°C and a humidity of 92%. Thereafter, the evaluation for anti-blocking property of each of the test pieces of Experimental Examples 1 to 7 was carried out according to the following criteria. The results are presented in Table 1.

### <Evaluation criteria for anti-blocking property>

A: No sticking between test pieces
B: There is slight sticking between test pieces (There is resistance or peeling noise when the test pieces are peeled off from each other.)
C: The test pieces are completely sticked tightly with each other. There is ink peeling (transfer).

If the evaluation criteria for the anti-blocking property was B or higher, it was evaluated that the shrink label was able to suppress the occurrence of blocking.

### <Evaluation method for label attachment adaptability of shrink labels of Experimental Examples 1 to 7>

Using a label applicator in LSA9000 series manufactured by Fuji Astec, Inc., evaluation for the label attachment adaptability of each shrink label 10 of Experimental Example 1 was carried out according to the following evaluation criteria. The results are presented in Table 1. Note that, the evaluation of the label attachment adaptability was performed by continuous attachment of 500 PET containers, and the surface of the PET container was wetted with a water droplet at the time of attachment.

### <Evaluation criteria for label attachment adaptability>

A: Defective attachment rate of label misalignment is 1.5% or less
B: Defective attachment rate of label misalignment is within a range from 1.6% to 3.0%
C: Defective attachment rate of label misalignment is 3.1% or more

If the evaluation criteria for label attachment adaptability was B or higher, it was evaluated that the occurrence of defective attachment of the shrink label onto a container was able to be suppressed.

**Table 1**

| | | Experimental Examples | | | | | | |
|---|---|---|---|---|---|---|---|---|
| | | 1 | 2 | 3 | 4 | 5 | 6 | 7 |
| Inner layer | Type | Uretha ne white | Uretha ne white | Aery lic whit e | Aery lic whit e | Aery lic whit e | Uretha ne transpa rent | ABSEN CE |
| | Curing agent | Isocya nate 5% | Isocya nate 5% | Epo xy 3% | Epo xy 2% | 0% | 0% | ABSEN CE |
| Outer layer | Type | Uretha ne white | Acrylic white | Acry lic whit e | Aery lic whit e | Aery lic whit e | Acrylic transpa rent | Acrylic transpa rent |
| | Curing agent | Isocya nate 2% | Epoxy 2% | Epo xy 2% | Epo xy 3% | 0% | Epoxy 6% | Epoxy 6% |
| DRY | Coefficient of static friction | 0.33 | 0.33 | 0.33 | 0.32 | 0.34 | 0.28 | 0.23 |
| | Coefficient of dynamic friction | 0.33 | 0.34 | 0.32 | 0.32 | 0.29 | 0.22 | 0.29 |
| 0.1 mL | Coefficient of static friction | 0.31 | 0.23 | 0.26 | 0.29 | 0.30 | 0.29 | 0.24 |
| | Coefficient of dynamic friction | 0.26 | 0.26 | 0.31 | 0.33 | 0.25 | 0.20 | 0.29 |
| 0.01 mL | Coefficient of static friction | 1.49 | 0.45 | 0.34 | 0.30 | 0.36 | 0.34 | 0.31 |
| | Coefficient of dynamic friction | 2.54 | 1.04 | 0.54 | 0.32 | 0.48 | 0.53 | 0.40 |
| Ink crack | | A | A | A | A | B | A | A |
| Label attachm ent | Test quantity (bottles) | 500 | 500 | 500 | 500 | 500 | 500 | 500 |
| | Defective attachment (bottles) | 19 | 6 | 4 | 7 | 2 | 9 | 5 |
| adapta bility | Defective attachment rate (%) | 3.80 | 1.20 | 0.80 | 1.40 | 0.40 | 1.80 | 1.00 |
| | Evaluation | C | A | A | A | A | B | A |
| Anti-blocking property | | A | A | B | B | A | A | A |

As indicated in Table 1, the shrink labels 10 of Experimental Examples 2 to 4 and 6 to 7, which are Examples provided with the outer layer 3b that is a water-based acrylic ink layer containing an acrylic resin and a curing agent on the base material 1, were capable of suppressing the occurrence of ink cracking in the outer layer 3b, but the shrink label 10 of Experimental Example 5, which is a Comparative Example having the outer layer 3b containing no curing agent, was incapable of suppressing the occurrence of ink cracking in the outer layer 3b.

As indicated in Table 1, the shrink labels of Experimental Examples 2 to 4 and 6 to 7, which are Examples each provided with the outer layer 3b that is a water-based acrylic ink layer containing an acrylic resin and a curing agent on the base material 1, were capable of suppressing the occurrence of defective attachment onto a container, but the shrink label of Experimental Example 1, which is a Comparative Example provided with the outer layer 3b that is a water-based urethane ink layer containing a urethane resin and a curing agent on the base material 1, was incapable of suppressing the occurrence of defective attachment onto a container.

As indicated in Table 1, the shrink label of Experimental Example 2, in which the inner layer 3a made up of the water-based urethane ink layer on the base material 1 and the outer layer 3b made up of the water-based acrylic ink layer on the inner layer 3a were provided, was capable of suppressing the occurrence of blocking more than the case of the shrink labels of Experimental Examples 3 and 4 having the inner layer 3a made up of the water-based acrylic ink layer.

Although the embodiment and the experimental example have been described above, an appropriately combination of the configurations of each of the above-described embodiments and each of the experimental examples were also planned from the beginning.

It should be considered that the embodiments and experimental examples disclosed herein are illustrative in all respects and not restrictive. The scope of the present disclosure is defined by the terms of the claims, rather than the description above, and is intended to include any modifications within the scope and meaning equivalent to the terms of the claims.

### Reference Signs List

1 Base material, 2 Color ink layer, 3a Inner layer, 3b Outer layer, 10 Shrink label, 11 Polyester surface, 12 Wire, 13 Load cell, 14 Test stand, 15 Tension testing machine, 16 Pulley, 17,52,53 Weight, 18 Arrow, 21 Pasting portion, 23 Inner residue, 30 Bottle container, 31 Spacer, 40 Tape, 41 Test piece, 51 Pedestal.

## Claims

1. A shrink label, comprising:
a heat-shrinkable base material; and
an outer layer that is a water-based acrylic ink layer on the base material,
the outer layer comprising an acrylic resin and a curing agent,
wherein a coefficient of dynamic friction of the outer layer against a polyester surface having a water droplet of 0.1 mL is 1.0 or less, and
a coefficient of dynamic friction of the outer layer against a polyester surface having a water droplet of 0.01 mL is 2.5 or less.

2. The shrink label according to claim 1, further comprising an inner layer between the base material and the outer layer,
the inner layer comprising a resin and a curing agent,
the resin in the inner layer comprising an acrylic resin or a urethane resin.

3. The shrink label according to claim 2, wherein a content percentage of the curing agent in the outer layer is smaller than a content percentage of the curing agent in the inner layer.

4. The shrink label according to any one of claims 1 to 3, further comprising a color ink layer between the base material and the outer layer, the color ink layer comprising a urethane resin.
